# EUROPÄISCHE PATENTSCHRIFT

(11) **EP 3 330 530 B1**
(45) Veröffentlichungstag und Bekanntmachung des Hinweises auf die Patenterteilung: **20.12.2023**
(21) Anmeldenummer: 17209222.3
(22) Anmeldetag: 05.04.2013
(51) Int. Cl.: F03D 1/06

(54) **ROTORBLATT EINER WINDENERGIEANLAGE**
WIND TURBINE BLADE
PALE D'ÉOLIENNE

(30) Priorität: 13.04.2012 DE 102012206109
(43) Veröffentlichungstag der Anmeldung: 06.06.2018
(62) Teilanmeldung aus: 13714314.5
(73) Patentinhaber: Wobben Properties GmbH, 26607 Aurich (DE)
(72) Erfinder: Bohlen, Thomas, 26624 Südbrookmerland (DE)
(74) Vertreter: Eisenführ Speiser

(56) Entgegenhaltungen:
- EP-A1- 1 978 245
- WO-A1-2012/007058
- WO-A1-2012/164305
- WO-A2-2010/086297
- DE-C1- 19 963 086
- US-A1- 2008 069 699
- US-A1- 2012 280 509

## Beschreibung

Die Erfindung betrifft ein Rotorblatt einer Windenergieanlage sowie eine Windenergieanlage.

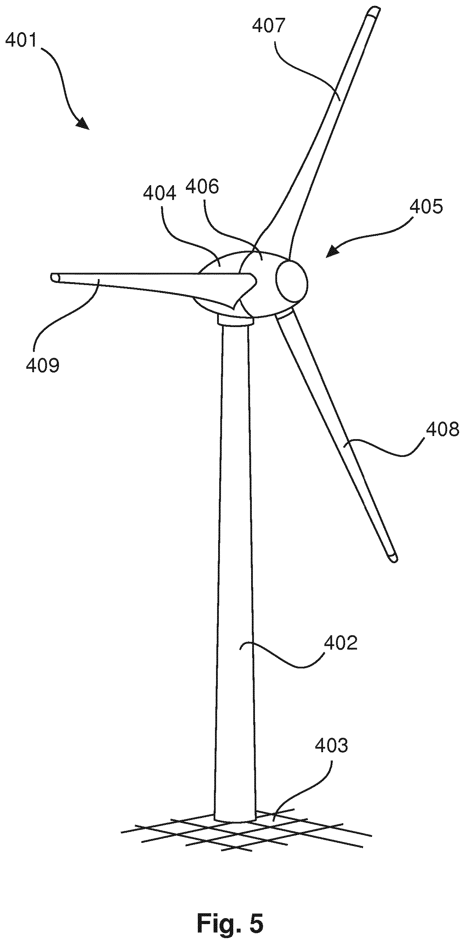

Rotorblätter für Windenergieanlagen sind allgemein bekannt. Solche Rotorblätter weisen ein Profil auf, welches den besonderen aerodynamischen Anforderungen Rechnung trägt. Üblicherweise weist eine Windenergieanlage einen aerodynamischen Rotor mit mehreren Rotorblättern auf. Eine solche Windenergieanlage ist exemplarisch in der Figur 5 gezeigt. Die aerodynamischen Eigenschaften solcher Rotorblätter sind entscheidend, da diese die Leistungsfähigkeit der Rotorblätter und damit der Windenergieanlage stark beeinflussen. Um die Leistungsfähigkeit der Rotorblätter zu erhöhen werden die Profile optimiert. Um beispielsweise in Regionen mit leichtem Wind, nämlich insbesondere an Binnenstandorten, eine möglichst stetige Stromproduktion sicherzustellen, weisen die aerodynamischen Rotoren einen Rotordurchmesser auf, der mehr als 80 Meter betragen kann. Bei solchen großen Windenergieanlagen und somit auch sehr großen Rotorblättern, führt dies zu einem hohen Rotorblattgewicht. Die großen und schweren Rotorblätter erzeugen hohe Lasten, welche auf die Windenergieanlage im Betrieb einwirken. Zudem ist die Herstellung sowie der Transport zu den jeweiligen Aufbaustandorten kompliziert und schwierig. Eine Realisierung eines zweigeteilten Rotorblattes, das günstiger für den Transport solcher großen Rotorblätter wäre, ist aufgrund der auftretenden Lasten und der zusätzlich durch die Trennstelle entstehenden Stabilitätsminderung aber nur bedingt möglich.

Das deutsche Patent- und Markenamt hat in der Prioritätsanmeldung folgenden Stand der Technik recherchiert: DE 10 2008 052 858 A1, DE 10 2008 003 411 A1, DE 103 07 682 A1, US 5 474 425 A und EP 2 339 171 A2. Weiterer Stand der Technik ist in US2008069699 offenbart.

Der Erfindung liegt somit die Aufgabe zugrunde, wenigstens eines der oben genannten Probleme zu beheben oder zu verringern, insbesondere ein Rotorblatt anzugeben, welches ein geringes Rotorblattgewicht aufweist mit möglichst hoher Steifigkeit, durch das die Lasten auf den Maschinenbau und den Turm reduziert werden, und welches einfach zu transportieren ist. Zumindest soll eine alternative Lösung vorgeschlagen werden.

Zur Lösung der Aufgabe wird erfindungsgemäß ein Rotorblatt gemäß Anspruch 1 vorgeschlagen. Ein solches Rotorblatt einer Windenergieanlage weist eine Rotorblattwurzel zur Anbindung des Rotorblattes an einer Rotornabe und eine zur Rotorblattwurzel abgewandten Seite angeordneten Rotorblattspitze auf. Dabei weist eine relative Profildicke, die als Verhältnis von Profildicke zu Profiltiefe definiert ist, in einem mittleren Bereich zwischen Rotorblattwurzel und Rotorblattspitze ein lokales Maximum auf. Unter der Profiltiefe wird im Folgenden die Länge des Profils, also der Abstand zwischen Profilnase und Profilhinterkante verstanden. Die Profildicke bezeichnet den Abstand zwischen Profilober- und Profilunterseite. Die relative Profildicke weist somit einen geringen Wert auf, wenn die Profildicke klein ist und/oder die Profiltiefe groß ist.

Die relative Profildicke weist zwischen Rotorblattwurzel und Rotorblattspitze ein lokales Maximum auf. Das lokale Maximum befindet sich im mittleren Bereich zwischen Rotorblattwurzel und Rotorblattspitze, vorzugsweise in einem Bereich von 30 bis 60% der Gesamtlänge des Rotorblattes, gemessen von der Rotorblattwurzel zur Rotorblattspitze. Bei einer Gesamtlänge von bspw. 60 Metern befindet sich das lokale Maximum somit in einem Bereich von vorzugsweise 18 Metern bis 36 Metern. Die relative Profildicke nimmt also zunächst ausgehend von der Rotorblattwurzel ab und steigt dann in dem mittleren Bereich wieder bis zu dem lokalen Maximum an, nämlich bis zu einer Stelle an, in deren Umgebung die relative Profildicke keinen höheren Wert aufweist. Das lokale Maximum im mittleren Bereich des Rotorblatts kommt insbesondere dadurch zustande, dass die Profiltiefe ausgehend von der Rotorblattwurzel bis zum mittleren Bereich stark abnimmt. Gleichzeitig oder alternativ kann die Profildicke erhöht werden bzw. nicht so stark wie die Profiltiefe abnehmen. Dadurch wird eine Materialeinsparung erzielt, insbesondere zwischen Rotorblattwurzel und dem mittleren Bereich, und somit eine Gewichtseinsparung. Durch die Erhöhung der Profildicke wird eine hohe Stabilität des Rotorblattes erzeugt.

Es wurde erkannt, dass eine Abnahme der Profiltiefe im mittleren Bereich zwar dort eine Verringerung der Tragfähigkeit zur Folge haben kann, dass aber gleichzeitig eine Verringerung des Gewichts des Rotorblattes erreicht wird. Eine etwaige Verschlechterung der Effizienz des Rotorblattes wird zum Erreichen eines geringeren Gewichts in Kauf genommen. Dabei wird im mittleren Bereich bei möglichst guter Effizienz aber stärker auf Stabilität und Steifigkeit fokussiert und im äußeren Bereich stärker auf eine hohe Effizienz fokussiert. Somit wird ein Profil vorgeschlagen, bei dem, die Profiltiefe vom mittleren Bereich nach außen zur Rotorblattspitze hin zumindest schwächer abnimmt als im mittleren Bereich.

Vorzugsweise beträgt die relative Profildicke des lokalen Maximums 35% bis 50%, insbesondere 40% bis 45%. Üblicherweise beginnt die relative Profildicke an der Rotorblattwurzel bei einem Wert von 100% bis 40%. Ein Wert von etwa 100% bedeutet dabei, dass die Profildicke in etwa mit der Profiltiefe identisch ist. Danach fällt der Wert monoton ab. In einer erfindungsgemäßen Ausführungsform fällt der Wert ausgehend von der Rotorblattwurzel zunächst ab, bis er ein lokales Minimum erreicht. Nach dem lokalen Minimum verzeichnet die relative Profildicke einen Anstieg bis sie etwa 35% bis 50% beträgt.

In einer bevorzugten Ausführungsform weist das Rotorblatt im mittleren Bereich und/oder im Bereich des lokalen Maximums eine Profiltiefe von 1500mm bis 3500mm, insbesondere etwa 2000mm auf. Wenn das Rotorblatt im Bereich der Rotorblattwurzel eine Profiltiefe von etwa 6000mm aufweist, sinkt die Profiltiefe also bis zum mittleren Bereich und/oder bis zum Bereich des lokalen Maximums um etwa ein Drittel.

In einer besonders bevorzugten Ausführungsform ist das Rotorblatt aus einem ersten und einem zweiten Rotorblattabschnitt zusammengesetzt und der erste Rotorblattabschnitt weist die Rotorblattwurzel und der zweite Rotorblattabschnitt die Rotorblattspitze auf. Der erste und der zweite Rotorblattabschnitt sind an einer Trennstelle miteinander verbunden. Dabei ist die Trennstelle im mittleren Bereich zwischen Rotorblattwurzel und Rotorblattspitze und/oder im Bereich des lokalen Maximums angeordnet.

Durch das Zusammensetzen des Rotorblattes aus zwei Rotorblattabschnitten wird der Transport des Rotorblattes zu dem entsprechenden Aufstellungsort der Windenergieanlage erheblich erleichtert. Befindet sich die Trennstelle im mittleren Bereich bedeutet das bei einem Rotordurchmesser von über 80 Metern, dass beispielsweise nur noch zwei Rotorblattabschnitte mit jeweils etwa 40 Metern transportiert werden müssen. Zudem ist im mittleren Bereich und/oder im Bereich des lokalen Maximums der relativen Profildicke insbesondere die Profiltiefe bei einer hohen Profildicke gering. Dadurch ist das Rotorblatt an dieser Stelle stabil ausgebildet. Die durch die Trennstelle auftretenden zusätzlichen Belastungen werden somit weitestgehend abgefangen.

Vorzugsweise ist das Rotorblatt für eine Schnelllaufzahl in einem Bereich von 7 bis 10, vorzugsweise von 8 bis 9, ausgelegt. Dabei ist die Schnelllaufzahl als das Verhältnis von Umfangsgeschwindigkeit an der Rotorblattspitze zur Windgeschwindigkeit definiert. Hohe Auslegungsschnelllaufzahlen führen zu einem hohen Leistungsbeiwert und können zu schlanken, schnell rotierenden Blättern führen.

In einer weiteren Ausführungsform weist das Rotorblatt in einem Bereich von 90% bis 95% der Gesamtlänge des Rotorblattes, gemessen von der Rotorblattwurzel zur Rotorblattspitze, eine Profiltiefe auf, welche etwa 5% bis 15%, insbesondere etwa 10% der Profiltiefe im Bereich der Rotorblattwurzel entspricht.

Durch eine solche reduzierte Profiltiefe im Bereich der Rotorblattspitze werden auf den Maschinenbau und den Turm wirkende Lasten, insbesondere aerodynamische Lasten, reduziert. Es wird im Grunde ein verhältnismäßig schlankes Rotorblatt vorgeschlagen.

In einer bevorzugten Ausführungsform weist das Rotorblatt bei der Rotorblattwurzel eine Profiltiefe von wenigstens 3900mm, insbesondere in einem Bereich von 4000mm bis 8000mm auf und/oder im Bereich von 90% bis 95% der Gesamtlänge, insbesondere bei 90%, ausgehend von der Rotorblattwurzel, eine Profiltiefe von maximal 1000mm, insbesondere in einem Bereich von 700mm bis 400mm auf.

Vorzugsweise weist das Rotorblatt im mittleren Bereich, insbesondere bei 50% der Gesamtlänge des Rotorblattes und/oder im Bereich des lokalen Maximums eine Profiltiefe auf, welche etwa 20% bis 30%, insbesondere etwa 25%, der Profiltiefe im Bereich der Rotorblattwurzel entspricht. Beträgt beispielsweise die Profiltiefe im Bereich der Rotorblattwurzel 6000mm, entspricht die Profiltiefe im Bereich des lokalen Maximums und/oder im mittleren Bereich nur noch etwa 1500mm. Durch diese schnelle Abnahme der Profiltiefe von der Rotorblattwurzel bis zum mittleren Bereich entsteht ein schlankes Profil mit geringen Lasten, insbesondere aerodynamischen Lasten. Die Lasten sind geringer als bei anderen bekannten Rotorblättern. Bei den bekannten Profilen nimmt die Rotorblatttiefe üblicherweise im Wesentlichen linear ab. Dadurch ist insbesondere zwischen der Rotorblattwurzel und dem mittleren Bereich eine höhere Profiltiefe vorhanden und somit auch mehr Material.

Weiterhin wird erfindungsgemäß eine Windenergieanlage mit wenigstens einem Rotorblatt nach wenigstens einer der vorstehenden Ausführungen vorgeschlagen. Eine solche Windenergieanlage ist durch das wenigstens eine schlanke und schnell rotierende Rotorblatt durch eine hohe Auslegungsschnelllaufzahl und einen hohen Leistungsbeiwert wirtschaftlich effizient. Die Windenergieanlage ist dadurch insbesondere auch für den Betrieb im Teillastbereich und/oder für schwachen Wind und somit auch für Binnenstandorte geeignet. Die Windenergieanlage weist vorzugsweise drei Rotorblätter auf.

Nachfolgend wird die Erfindung anhand von Ausführungsbeispielen unter Bezugnahme auf die begleitenden Figuren näher erläutert. Die Figuren enthalten dabei teilweise vereinfachte, schematische Darstellungen.
- Fig. 1: zeigt eine schematische Darstellung eines Rotorblattes.
- Fig. 2: zeigt ein Diagramm, in dem die relative Profildicke über dem normierten Rotorradius dargestellt ist.
- Fig. 3: zeigt ein Diagramm, in dem die Tiefe über dem Radius dargestellt ist.
- Fig. 4: zeigt ein Diagramm, in dem die Dicke über dem Radius dargestellt ist.
- Fig. 5: zeigt eine Windenergieanlage in einer perspektivischen Ansicht.
- Fig. 6: zeigt ein Rotorblatt in einer Seitenansicht.
- Fig. 7: zeigt das Rotorblatt der Figur 6 in einer weiteren Seitenansicht.

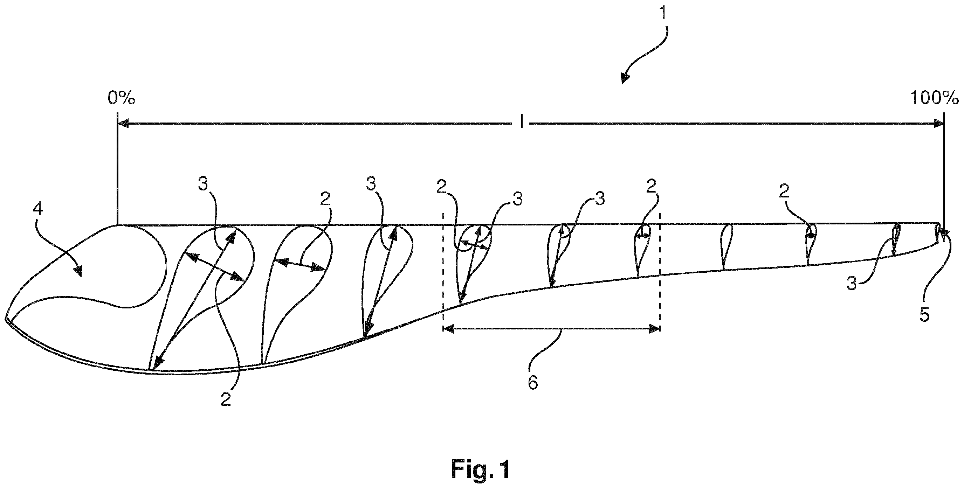

Fig. 1 zeigt eine Verteilung verschiedener Profilgeometrien eines Rotorblattes 1 einer Ausführungsform. In dem Rotorblatt 1 sind abschnittsweise Profildicken 2 und Profiltiefen 3 dargestellt. Das Rotorblatt 1 weist an einem Ende die Rotorblattwurzel 4 und an dem dazu abgewandten Ende einen Anschlussbereich 5 zum Anbringen einer Rotorblattspitze auf. An der Rotorblattwurzel 4 weist das Rotorblatt eine große Profiltiefe 3 auf. Im Anschlussbereich 5 ist die Profiltiefe 3 dagegen sehr viel kleiner. Die Profiltiefe nimmt, ausgehend von der Rotorblattwurzel 4, die auch als Profilwurzel 4 bezeichnet werden kann, bis zu einem mittleren Bereich 6 deutlich ab. In dem mittleren Bereich 6 kann eine Trennstelle vorgesehen sein (hier nicht dargestellt). Vom mittleren Bereich 6 bis zum Anschlussbereich 5 ist die Profiltiefe 3 nahezu konstant. Das gezeigte Rotorblatt 1 ist zum Anbringen einer kleinen Rotorblattspitze vorgesehen, die weniger als 1% der Länge des gezeigten Rotorblatts 1 ausmacht und daher hier vernachlässigt werden kann.

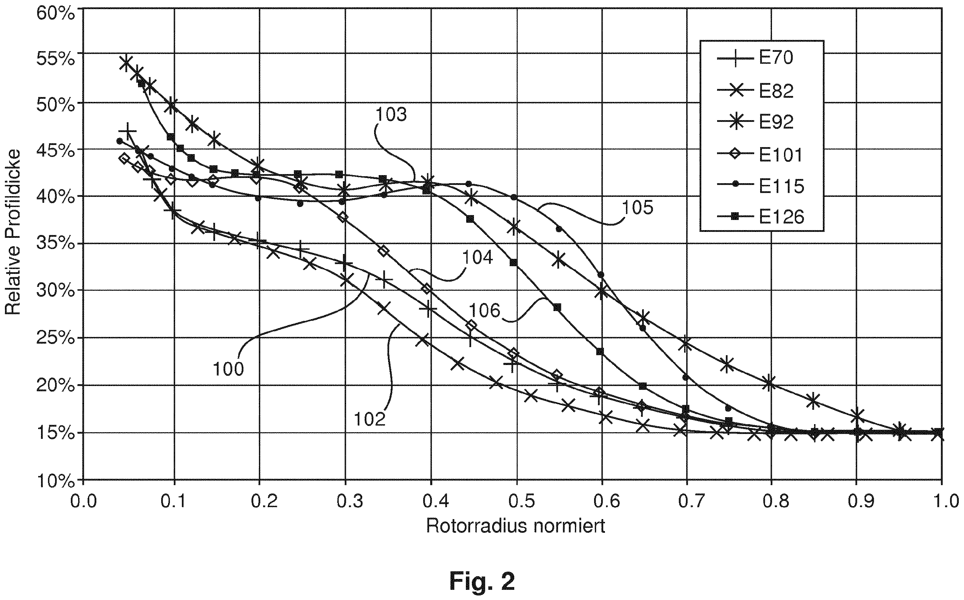

Fig. 2 zeigt ein Diagramm, in dem für verschiedene Rotorblätter einer Windenergieanlage jeweils die relative Profildicke über den normierten Rotorradius eingezeichnet ist. Die relative Profildicke ist an der Ordinate in Prozent angegeben und verläuft in 5-%-Schritten von 10% bis 60%. An der Abszisse ist jeweils der normierte Rotorradius von 0 bis 1 in 0,1 -Schritten angegeben. Der Rotorradius bezieht sich hierbei jeweils auf einen Rotor mit wenigstens einem an einer Rotornabe des Rotors montierten Rotorblatt. Die Länge des jeweiligen Rotorblattes erstreckt sich von der Rotorblattwurzel zur Rotorblattspitze. Das Rotorblatt beginnt mit seiner Rotorblattwurzel etwa bei einem Wert von 0,05 des normierten Rotorradius und endet mit seiner Rotorblattspitze bei dem Wert 1 des normierten Rotorradius. Im Bereich der Rotorblattspitze entspricht der Wert des normierten Rotorradius etwa der prozentualen Länge des betreffenden Rotorblattes. Insbesondere ist der Wert 1 des normierten Rotorradius gleich 100% der Rotorblattlänge.

In dem Diagramm sind insgesamt sechs Graphen zu erkennen. Die Graphen stellen den Verlauf der relativen Profildicke von Rotorblättern verschiedener bekannter und geplanter Windenergieanlagen der Enercon GmbH dar. Graph 100 zeigt dabei eine Windenergieanlage mit einem Rotordurchmesser von ca. 70m (Typ E-70), Graph 102 eine mit einem Rotordurchmesser von ca. 82m( Typ E-82), Graph 103 eine mit einem Rotordurchmesser von ca. 92m (Typ E-92), Graph 104 eine mit einem Rotordurchmesser von ca. 101m (Typ E-101), Graph 105 eine mit einem Rotordurchmesser von ca. 115m (Typ E-115) und Graph 106 eine mit einem Rotordurchmesser von ca. 126m (Typ E-126). Die Graphen 100, 102, 104 und 106 zeigen bekannten Stand der Technik und die Graphen 103 und 105 den Verlauf der relativen Profildicke jeweils eines erfindungsgemäßen Ausführungsbeispiels. Anhand der Graphen ist zu erkennen, dass der Verlauf der relativen Profildicke der Graphen 100 und 102 im Wesentlichen monoton fallend verläuft. Die Graphen 100 und 102 beginnen im Bereich der Rotorblattwurzel, also zwischen einem normierten Rotorradius von 0,0 und 0,1 bei einer relativen Profildicke zwischen 45% und 50%. Die jeweiligen Graphen weisen bis zu dem normierten Rotorradius von 1,0 keine lokalen Maxima oder Minima auf. Die Werte der relativen Profildicke nehmen stetig ab.

Der Graph 103 gemäß der einen Ausführungsform beginnt bei einer relativen Profildicke von etwa 55% an der Rotorblattwurzel, d.h. also in etwa bei einem normierten Rotorradius zwischen 0 und 0,1 und fällt dann zunächst ab auf eine relative Profildicke von etwa 40% bei einem normierten Rotorradius von 0,3. Danach steigt der Verlauf der relativen Profildicke, bis er bei einem normierten Rotorradius von 0,4 sein lokales Maximum mit etwa 42% erreicht. Die relative Profildicke steigt somit wieder um 2% zu ihrem lokalen Maximum an. Das lokale Maximum befindet sich im mittleren Bereich des Rotorblattes. Es weist somit eine maximale Auslenkung von mehr als 1% auf. Danach verläuft die relative Profildicke bis zu einem normierten Rotorradius von 1,0 und damit bis zu einer Rotorblattlänge von 100% monoton fallend auf einen Wert von etwa 15%.

Der Verlauf des Graphen 105 der weiteren Ausführungsform ist dem des Graphen 103 ähnlich. Die relative Profildicke beginnt an der Rotorblattwurzel bei etwa 45%, fällt dann bei einem normierten Rotorradius von etwa 0,25 auf einen Wert von unter 40% und steigt danach an. Bei einem normierten Rotorradius von etwa 0,45 erreicht der Wert der relativen Profildicke ein lokales Maximum mit einem Wert von etwa 42%. Dies entspricht einem Wiederanstieg von etwa 3%. Anschließend ist der Verlauf der relativen Profildicke im Wesentlichen monoton fallend, bis bei einer relativen Profildicke von etwa 0,8 der Wert von 15% erreicht wird. Der weitere Verlauf bis zur Rotorblattspitze bleibt in etwa konstant bei 15%.

Im Gegensatz zu den Graphen 100 und 102 weisen die Graphen 103 und 105 ein lokales Maximum im mittleren Bereich auf. Das lokale Maximum entsteht hier durch Reduzierung der Profiltiefe bei gleichzeitig geringerer Reduzierung der Profildicke in diesem Bereich. Das Profil, das durch diesen Verlauf der relativen Profildicke erzielt wird ist ein schlankes Rotorblatt, welches im Gegensatz zu den bekannten Rotorblättern dadurch geringere Lasten aufnimmt, dass die Profiltiefe über die Gesamtlänge des Rotorblattes ausgehend von der Rotorblattwurzel zunächst schnell abnimmt. Dadurch werden auch aerodynamische Lasten reduziert und somit die am Maschinenhaus auftretenden Lasten reduziert. Zudem kann das Rotorblatt ab dem mittleren Bereich eine in etwa konstante Profildicke aufweisen. Dadurch erhält das Rotorblatt Stabilität. Bei den bekannten Rotorblättern weist das Profil im Wesentlichen eine trapezförmige Form auf, die sich in dem Diagramm durch einen monoton fallenden Verlauf der relativen Dicke bemerkbar macht.

Die relative Profildicke des Graphen 104 beginnt an der Rotorblattwurzel bei 44%. Die relative Profildicke sinkt zunächst bei einem normierten Radius von 0,1 auf einen Wert von ca. 42%. Danach steigt sie bis zu einem normierten Rotorradius von 0,2, was etwa 15% der Rotorblattlänge entspricht, gering auf einen Wert von ca. 42,5% an. Der Verlauf des Graphen 104 weist somit zwar ein lokales Maximum auf, welches sich jedoch nicht im mittleren Bereich des Rotorblattes befindet und eine kaum nennenswerte Steigung aufweist. Insbesondere ist ein solcher Verlauf auch schlecht für ein zweiteiliges Rotorblatt mit einer Trennstelle im mittleren Bereich geeignet.

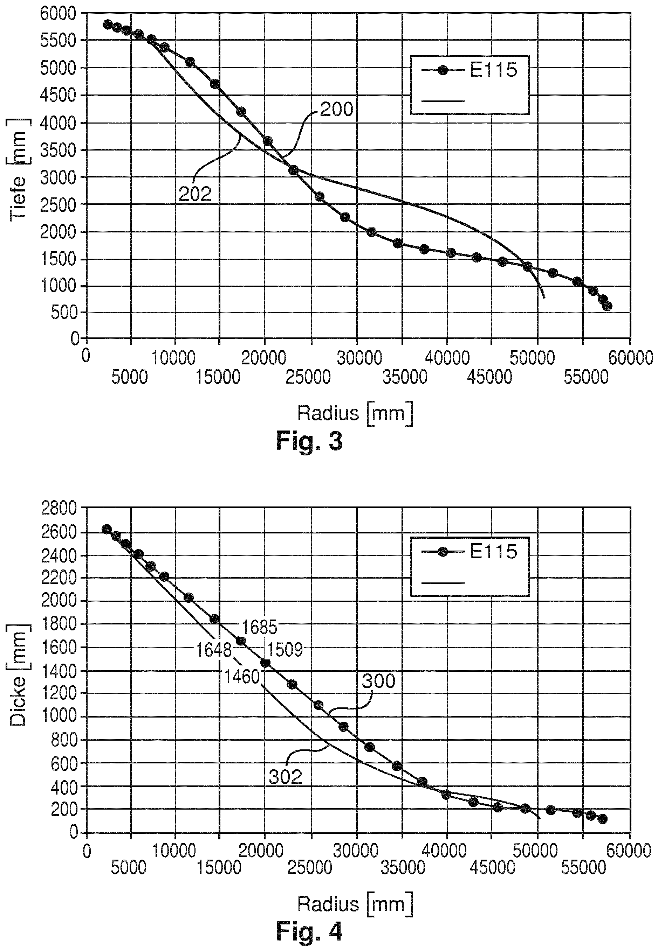

Vorteilhaft ist auch ein linearer Dickenverlauf von der Rotorblattwurzel zum mittleren Bereich, wie er in Figur 4 in beiden Graphen gezeigt ist. Ein solcher linearer Verlauf, den das Rotorblatt des Graphen 104 nicht aufweist, ist konstruktiv vorteilhaft. Ein solches Rotorblatt ist besser herstellbar und hat einen gleichmäßigeren Spannungsverlauf. Außerdem ist eine gleichmäßigere Verformung beim Einwirken äußerer Lasten zu erwarten. Ein solcher linearer Verlauf ist grundsätzlich vorteilhaft, nicht nur für die gezeigten Ausführungsformen. Der lineare Dickenverlauf wird vorgeschlagen im Bereich von 5% bis 25% der Gesamtlänge des Rotorblattes, vorzugsweise von 5% bis 35%, insbesondere von der Rotorblattwurzel bis zum mittleren Bereich.

Der Verlauf der relativen Profildicke des Graphen 106 beginnt im Bereich der Rotorblattwurzel bei ca. 52%. Anschließend sinkt der Wert bis zu einem normierten Rotorradius von 0,2 auf etwa 42,5%. Danach verläuft die relative Profildicke nahezu konstant bzw. weist eine nicht nennenswerte Steigung auf. Dieser Bereich kann auch als Sattelstelle im mathematischen Sinne bezeichnet werden. Ab einem Rotorradius von etwa 0,3 verläuft die relative Profildicke streng monoton fallend.

Im Rotorblattwurzelbereich beginnt der Verlauf der relativen Profildicke der gezeigten Ausführungsformen nicht bei 100% wie es bei anderen bekannten Rotorblättern der Fall wäre. Hierbei sind die Profiltiefe und die Profildicke im Bereich der Rotorblattwurzel nahezu identisch. Vielmehr beginnt der dargestellte Verlauf zwischen 40% und 55%. Dies hat aerodynamische Vorteile, insbesondere hinsichtlich der Wirbelbildung im Bereich der Rotorblattwurzel, welche durch eine solche Profilform unterdrückt, zumindest verringert wird.

In Fig. 3 ist ein Diagramm dargestellt, welches die Profiltiefe - in dem Diagramm vereinfacht als Tiefe bezeichnet - in Millimetern über den Rotorradius - in dem Diagramm vereinfacht als Radius bezeichnet - in Millimetern darstellt. Die Profiltiefe ist in 500er Schritten von 0mm bis 6000mm angezeigt. Der Rotorblattradius ist in 5000er Schritten von 0mm bis 60000mm angezeigt. In Fig. 3 sind zwei Graphen 200 und 202 zu erkennen, wobei Graph 200 den Profiltiefenverlauf eines erfindungsgemäßen Ausführungsbeispiels darstellt. Der Graph 202 zeigt einen Graphenverlauf eines anderen Rotorblattes zum Vergleich. Graph 200 zeigt den Profiltiefenverlauf einer Windenergieanlage der Enercon GmbH vom Typ E-115.

Die zwei Graphen 200, 202 beginnen an der Rotorblattwurzel in etwa mit derselben Profiltiefe. Die Profiltiefe liegt in einem Bereich zwischen 5500mm und 6000mm. Danach fallen beide Graphen 200, 202 ab, bis sie bei einem Radius zwischen 20000mm und 25000mm eine Profiltiefe in einem Bereich zwischen 3000mm und 3500mm erreicht haben. Danach fällt die Profiltiefe des Graphen 200 deutlich mehr ab, als die des Graphen 202. So beträgt bspw. bei einem Radius von 25400mm die Profiltiefe des Graphen 200 bereits nur noch 2500mm und die des Graphen 202 noch 3000m. Bei einem Radius von 35000mm beträgt die Profiltiefe des Graphen 200 nur noch etwa 1550mm und die des anderen Graphen 202 noch 2500mm. Erst im Bereich der Flügelspitze, d.h. bei einem Radius in dem Bereich von 55000mm bis 600000mm fallen die Profiltiefen wieder annähernd zusammen.

Fig. 4 zeigt ein Diagramm, in dem zu den Profiltiefen der Figur 3 jeweils die Profildicke - in dem Diagramm vereinfacht als Dicke bezeichnet - in Millimetern über den Rotorradius - in dem Diagramm vereinfacht als Radius bezeichnet - in Millimetern abgebildet ist. Die Profildicke wird von 0mm bis 2800mm in 200mm-Schritten angezeigt. Der Radius ist von 0mm bis 60000mm in 5000er Schritten dargestellt. Es sind zwei Graphen dargestellt, wobei der erste Graph 300 den Profildickenverlauf eines erfindungsgemäßen Ausführungsbeispiels darstellt und der Graph 302 den eines anderen Rotorblattes zum Vergleich. Graph 300 zeigt den Profildickenverlauf eines Rotorblattes einer Windenergieanlage der Enercon GmbH vom Typ E-115.

Das Rotorblatt des Graphs 200 bzw. 300 der Figuren 3 und 4 weist ein lokales Maximum der relativen Profildicke im mittleren Bereich zwischen Rotorblattwurzel und Rotorblattspitze auf.

Fig. 5 zeigt eine Windenergieanlage 400 mit einem Turm 402, der auf einem Fundament 403 errichtet ist. Am oberen, dem Fundament 403 gegenüberliegenden Ende befindet sich eine Gondel 404 (Maschinenhaus) mit einem Rotor 405, der im Wesentlichen aus einer Rotornabe 406 und daran angebrachten Rotorblättern 407, 408 und 409 besteht. Der Rotor 405 ist mit einem elektrischen Generator im Innern der Gondel 404 zur Wandlung von mechanischer Arbeit in elektrische Energie gekoppelt. Die Gondel 404 ist drehbar auf dem Turm 402 gelagert, dessen Fundament 403 die notwendige Standsicherheit gibt.

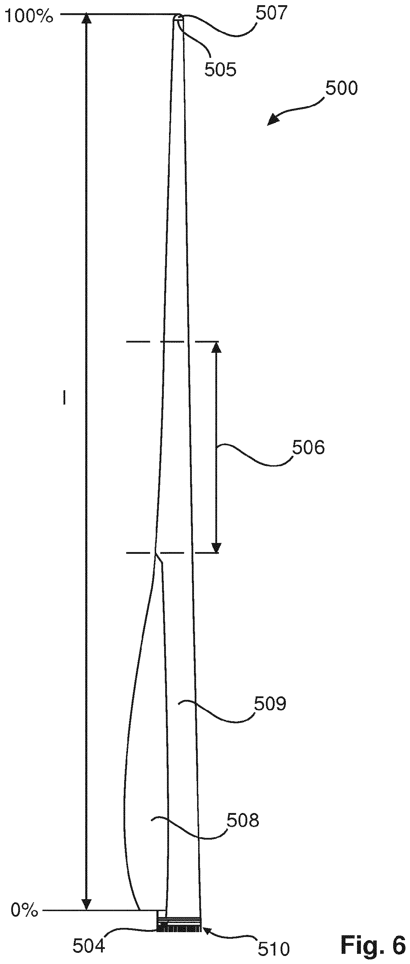

Fig. 6 zeigt eine Seitenansicht eines Rotorblattes 500 einer Ausführungsform über seine Gesamtlänge I, d.h. von 0% bis 100%. Das Rotorblatt 500 weist an einem Ende eine Rotorblattwurzel 504 und an dem dazu abgewandten Ende eine Rotorblattspitze 507 auf. Die Rotorblattspitze 507 ist an einem Anschlussbereich 505 mit dem restlichen Teil des Rotorblattes verbunden. An der Rotorblattwurzel 504 weist das Rotorblatt eine große Profiltiefe auf. Im Anschlussbereich 505 und an der Rotorblattspitze 507 ist die Profiltiefe dagegen sehr viel kleiner. Die Profiltiefe nimmt, ausgehend von der Rotorblattwurzel 504, die auch als Profilwurzel 504 bezeichnet werden kann, bis zu einem mittleren Bereich 506 deutlich ab. In dem mittleren Bereich 506 kann eine Trennstelle vorgesehen sein (hier nicht dargestellt). Vom mittleren Bereich 506 bis zum Anschlussbereich 505 ist die Profiltiefe nahezu konstant.

Das Rotorblatt 500 weist im Bereich der Rotorblattwurzel 504 eine zweigeteilte Form auf. Das Rotorblatt 500 besteht somit aus einem Grundprofil 509, an das in dem Bereich der Rotorblattwurzel 504 ein weiterer Abschnitt 508 zur Erhöhung der Rotorblatttiefe des Rotorblattes 500 angeordnet ist. Der Abschnitt 508 ist dabei beispielsweise an das Grundprofil 509 angeklebt. Eine solche zweigeteilte Form ist einfacher in der Handhabung beim Transport zum Aufstellungsort und einfacher zu fertigen.

Weiterhin ist in Figur 6 ein Nabenanschlussbereich 510 zu erkennen. Über den Nabenanschlussbereich 510 wird das Rotorblatt 500 an die Rotornabe angeschlossen.

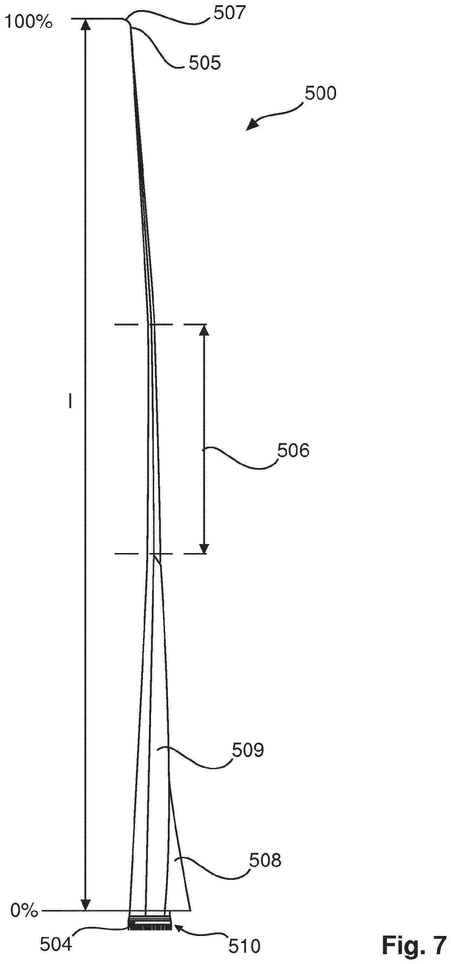

Figur 7 zeigt eine weitere Seitenansicht des Rotorblattes 500 der Figur 6. Es ist das Rotorblatt 500 mit dem Grundprofil 509, dem Abschnitt 508 zur Erhöhung der Rotorblatttiefe, der mittlere Bereich 506, die Rotorblattwurzel 504 und der Nabenanschlussbereich 510 sowie der Anschlussbereich 505 zur Rotorblattspitze 507 zu erkennen. Die Rotorblattspitze 507 ist als ein sogenanntes Winglet ausgeführt. Dadurch werden Wirbel an der Rotorblattspitze verringert.

## Patentansprüche

1. Rotorblatt (1) einer Windenergieanlage mit einem Rotor mit mehr als 80 Metern Rotordurchmesser, mit:
- einer Rotorblattwurzel (4) zur Anbindung des Rotorblattes (1) an eine Rotornabe und
- einer zur Rotorblattwurzel (4) abgewandten Seite angeordneten Rotorblattspitze,
wobei eine relative Profildicke (2), die als Verhältnis von Profildicke (2) zu Profiltiefe (3) definiert ist, in einem mittleren Bereich (6) zwischen Rotorblattwurzel und Rotorblattspitze ein lokales Maximum aufweist,
**dadurch gekennzeichnet, dass**
die relative Profildicke (2) des lokalen Maximums 35% bis 50%, insbesondere 40% bis 45%, beträgt und/oder
das Rotorblatt (1) im Bereich des lokalen Maximums eine Profiltiefe von 1500mm bis 3500mm, insbesondere etwa 2000mm, aufweist.

2. Rotorblatt (1) nach Anspruch 1,
**dadurch gekennzeichnet, dass**
- das Rotorblatt (1) aus einem ersten und einem zweiten Rotorblattabschnitt zusammengesetzt ist, und
- der erste Rotorblattabschnitt die Rotorblattwurzel (4) und der zweite Rotorblattabschnitt die Rotorblattspitze aufweist, und
- der erste und der zweite Rotorblattabschnitt an einer Trennstelle miteinander verbunden sind,
wobei die Trennstelle im mittleren Bereich (6) zwischen Rotorblattwurzel (4) und Rotorblattspitze und/oder im Bereich des lokalen Maximums angeordnet ist.

3. Rotorblatt (1) nach einem der vorstehenden Ansprüche,
**dadurch gekennzeichnet, dass**
das Rotorblatt (1) für eine Schnelllaufzahl in einem Bereich von 7 bis 10 ausgelegt ist, vorzugsweise von 8 bis 9.

4. Rotorblatt (1) nach einem der vorstehenden Ansprüche,
**dadurch gekennzeichnet, dass**
das Rotorblatt (1) in einem Bereich von 90% bis 95%, der Gesamtlänge des Rotorblattes, gemessen von der Rotorblattwurzel zur Rotorblattspitze eine Profiltiefe (3) aufweist, welche etwa 5% bis 15%, insbesondere etwa 10%, der Profiltiefe (3) im Bereich der Rotorblattwurzel (4) entspricht und/oder
dass das Rotorblatt von 5% bis 25% der Gesamtlänge des Rotorblattes, vorzugsweise von 5% bis 35%, insbesondere von der Rotorblattwurzel bis zum mittleren Bereich, einen linearen Dickenverlauf aufweist.

5. Rotorblatt (1) nach einem der vorstehenden Ansprüche,
**dadurch gekennzeichnet, dass**
das Rotorblatt (1) bei der Rotorblattwurzel (4) eine Profiltiefe (3) von wenigstens 3900mm, insbesondere in einem Bereich von 4000mm bis 8000mm, aufweist und/oder im Bereich von 90% bis 95% der Gesamtlänge, insbesondere bei 90%, ausgehend von der Rotorblattwurzel (4), eine Profiltiefe (3) von maximal 1000mm, insbesondere in einem Bereich von 700mm bis 400mm, aufweist.

6. Rotorblatt (1) nach einem der vorstehenden Ansprüche,
**dadurch gekennzeichnet, dass**
das Rotorblatt (1) im mittleren Bereiche eine Profiltiefe aufweist, welche etwa 20% bis 30%, insbesondere etwa 25%, der Profiltiefe im Bereich der Rotorblattwurzel (4) entspricht.

7. Windenergieanlage mit einem Rotor mit mehr als 80 Metern Rotordurchmesser und mit wenigstens einem Rotorblatt (1) nach einem der vorstehenden Ansprüche.

## Claims

1. A rotor blade (1) of a wind power installation with a rotor with more than 80 meters rotor diameter, comprising:
- a rotor blade root (4) for attachment of the rotor blade (1) to a rotor hub, and
- a rotor blade tip arranged at the side remote from the rotor blade root (4),
wherein a relative profile thickness (2) which is defined as the ratio of the profile thickness (2) to the profile depth (3) has a local maximum in a central region (6) between the rotor blade root and the rotor blade tip,
**characterised in that**
the relative profile thickness (2) of the local maximum is 35% to 50%, in particular 40% to 45% and/or
that in the region of the local maximum the rotor blade (1) has a profile depth of 1500 mm to 3500 mm, in particular about 2000 mm.

2. A rotor blade (1) according to claim 1,
**characterised in that**
- the rotor blade (1) is composed of a first and a second rotor blade portion, and
- the first rotor blade portion has the rotor blade root (4) and the second rotor blade portion has the rotor blade tip, and
- the first and the second rotor blade portions are connected together at a separation location,
wherein the separation location is arranged in the central region (6) between the rotor blade root (4) and the rotor blade tip and/or in the region of the local maximum.

3. A rotor blade (1) according to one of the preceding claims **characterised in that** the rotor blade (1) is designed for a tip speed ratio in a range of 7 to 10, preferably 8 to 9.

4. A rotor blade (1) according to one of the preceding claims **characterised in that** in a region of 90% to 95% of the total length of the rotor blade, measured from the rotor blade root to the rotor blade tip, the rotor blade (1) has a profile depth (3) which corresponds to about 5% to 15%, in particular about 10%, of the profile depth (3) in the region of the rotor blade root (4), and/or
the rotor blade has a linear thickness configuration at 5% to 25% of the total length of the rotor blade, preferably 5% to 35%, in particular from the rotor blade root to the central region.

5. A rotor blade (1) according to one of the preceding claims **characterised in that** at the rotor blade root (4) the rotor blade (1) has a profile depth (3) of at least 3900 mm, in particular in a region of 4000 mm to 8000 mm, and/or in the region of 90% to 95% of the total length, in particular at 90%, starting from the rotor blade root (4), it has a profile depth (3) of a maximum of 1000 mm, in particular in a region of 700 mm to 400 mm.

6. A rotor blade (1) according to one of the preceding claims **characterised in that** in the central region the rotor blade (1) has a profile depth which corresponds to about 20% to 30%, in particular about 25%, of the profile depth in the region of the rotor blade root (4).

7. A wind power installation with a rotor with more than 80 meters rotor diameter comprising at least one rotor blade (1) according to one of the preceding claims.

## Revendications

1. Pale de rotor (1) d'une éolienne avec un rotor avec plus de 80 mètres de diamètre de rotor, avec :
- un pied de pale de rotor (4) pour la liaison de la pale de rotor (1) avec un moyeu de rotor et
- un bout de pale de rotor agencé sur le côté éloigné du pied de pale de rotor (4),
dans laquelle une épaisseur de profil (2) relative qui est définie comme rapport entre l'épaisseur de profil (2) et la profondeur de profil (3), présente un maximum local dans une zone (6) médiane entre le pied de pale de rotor et le bout de pale de rotor,
**caractérisée en ce que**
l'épaisseur de profil (2) relative du maximum local est comprise entre 35 % et 50 %, en particulier entre 40 % et 45 %, et/ou
la pale de rotor (1) présente dans la zone du maximum local une profondeur de profil de 1500 mm à 3500 mm, en particulier environ de 2000 mm.

2. Pale de rotor (1) selon la revendication 1,
**caractérisée en ce que**
- la pale de rotor (1) est composée d'une première et d'une seconde section de pale de rotor, et
- la première section de pale de rotor présente le pied de pale de rotor (4) et la seconde section de pale de rotor présente le bout de pale de rotor, et
- la première et la seconde section de pale de rotor sont reliées entre elles au niveau d'un point de séparation,
dans laquelle le point de séparation est agencé dans la zone médiane (6) entre le pied de pale de rotor (4) et le bout de pale de rotor et/ou dans la zone du maximum local.

3. Pale de rotor (1) selon l'une des revendications précédentes,
**caractérisée en ce que**
la pale de rotor (1) est conçue pour une vitesse de rotation en bout de pale dans une plage de 7 à 10, de préférence de 8 à 9.

4. Pale de rotor (1) selon l'une des revendications précédentes,
**caractérisée en ce que**
la pale de rotor (1) présente, dans une plage de 90 % à 95 %, de la longueur entière de la pale de rotor, mesurée du pied de pale de rotor au bout de pale de rotor, une profondeur de profil (3) qui correspond environ à 5 % à 15 %, en particulier environ à 10 %, de la profondeur de profil (3) dans la zone du pied de pale de rotor (4) et/ou
la pale de rotor présente de 5 % à 25 % de la longueur entière de la pale de rotor, de préférence de 5 % à 35 %, en particulier du pied de pale de rotor jusqu'à une zone médiane, une étendue d'épaisseur linéaire.

5. Pale de rotor (1) selon l'une des revendications précédentes,
**caractérisée en ce que**
la pale de rotor (1) présente, pour le pied de pale de rotor (4), une profondeur de profil (3) d'au moins 3900 mm, en particulier dans une plage de 4000 mm à 8000 mm et/ou présente dans la plage de 90 % à 95 % de la longueur entière, en particulier de 90 %, à partir du pied de pale de rotor (4), une profondeur de profil (3) de 1000 mm maximum, en particulier dans une plage de 700 mm à 400 mm.

6. Pale de rotor (1) selon l'une des revendications précédentes,
**caractérisée en ce que**
la pale de rotor (1) présente, dans des zones médianes, une profondeur de profil qui correspond à environ 20 % à 30 %, en particulier à environ 25 %, de la profondeur de profil dans la zone du pied de pale de rotor (4).

7. Eolienne avec un rotor avec plus de 80 mètres de diamètre de rotor et avec au moins une pale de rotor (1) selon l'une des revendications précédentes.
